## Europäisches Patentamt
## European Patent Office
## Office européen des brevets

(19)

(11) Veröffentlichungsnummer: **0 262 382**
**B1**

(12) **EUROPÄISCHE PATENTSCHRIFT**

(45) Veröffentlichungstag der Patentschrift:
28.03.90

(51) Int. Cl.⁴: **F16K 31/42, F16K 31/40**

(21) Anmeldenummer: 87112270.1

(22) Anmeldetag: 25.08.87

(54) **Durch ein Hilfsverschlussteil vorgesteuertes Ventil.**

(30) Priorität: 01.10.86 CH 3924/86

(43) Veröffentlichungstag der Anmeldung:
06.04.88 Patentblatt 88/14

(45) Bekanntmachung des Hinweises auf die Patenterteilung:
28.03.90 Patentblatt 90/13

(84) Benannte Vertragsstaaten:
BE DE ES SE

(56) Entgegenhaltungen:
EP-A- 0 195 206
FR-A- 1 305 081
GB-A- 2 161 586
US-A- 4 304 264

(73) Patentinhaber: GEBRÜDER SULZER
AKTIENGESELLSCHAFT, Zürcherstrasse 9,
CH-8401 Winterthur(CH)

(72) Erfinder: Scanderbeg, Georges, Rösliweg 17,
CH-8400 Winterthur(CH)

(74) Vertreter: Sparing Röhl Henseler Patentanwälte
European Patent Attorneys, Rethelstrasse 123,
D-4000 Düsseldorf 1(DE)

## Beschreibung

Die Erfindung betrifft ein Ventil nach dem Oberbegriff des Anspruchs 1.

Es ist ein solches Ventil aus der EP-A 0 195 206 bekannt, bei dem das Oeffnungs- und Schliessverhalten im allgemeinen zufriedenstellend ist, insbesondere indem die Gefahr eines eventuellen, ungewollten Abhebens des Hilfsverschlussteils kurz nach dem Schliessen vermieden wird. Dieses Ventil wird häufig zur Steuerung von Sicherheitssystemen, beispielsweise für Dampferzeuger, eingesetzt, in denen es hauptsächlich als Steuerventil für Sicherheitsventile dient. Die Schnelligkeit mit der es auf ein Steuersignal reagiert - im Bereich von Sekundenbruchteilen - ist daher von ausschlaggebender Bedeutung. Es ist beim bekannten Ventil festgestellt worden, dass der eben erwähnten Schnelligkeit eine Grenze gesetzt ist, die in erster Linie von den Dimensionen des Ventils und von den vorhandenen Drücken abhängig ist.

Es ist Aufgabe der Erfindung, die besagte Schnelligkeit unter der Voraussetzung gleichbleibender Abmessungen und gleichbleibender Druckverhältnisse sowie ohne Benachteiligung des Oeffnungs- und Schliessverhaltens des bekannten Ventils zu vergrössern.

Diese Aufgabe wird erfindungsgemäss durch die kennzeichnenden Merkmale des Anspruchs 1 gelöst. In der Schliessstellung des Hilfsverschlussteils ermöglichen die ständige Verbindung des Druckraumes mit der Druckkammer und des Ausgleichsraumes mit der Ventilkammer eine Optimierung des auf den Hilfsverschlussteil wirkenden Druckunterschieds, so dass auf diesem Teil eine ausreichende Schliesskraft wirkt, deren Ueberwindung beim Oeffnen jedoch keinen übermässigen Energieaufwand erfordert. Infolge der beanspruchten Trennung der obigen Verbindungen wird das beim Oeffnen und Schliessen des Hilfsverschlussteils mit variablem Druck beaufschlagte Volumen auf ein Mindestmass reduziert, was sehr rasche Druckänderungen begünstigt. Ausserhalb seiner Schliessstellung wirken daher praktisch keine Druckunterschiede auf das Hilfsverschlussteil. Die Anordnung der Anschlagflächen hat zur Folge, dass bei geöffnetem Hilfsverschlussteil und geschlossenem Hauptverschlussteil eine grosse Durchströmungsfläche zum Druckabbau in der Ventilkammer und im Ausgleichsraum verfügbar ist, das Schliessen des Hilfsverschlussteils bei geöffnetem Hauptverschlussteil aber nur eines sehr kurzen Hubes bedarf. Die Schnelligkeit des Ventils wird dadurch vergrössert.

Die erfindungsgemässe Gestaltung des Ventils hat keinen Einfluss auf dessen äussere Formgebung und wirkt sich auch nicht wesentlich auf sein Gewicht aus, so dass es ohne weiteres anstelle des bekannten in bestehende Anlagen eingebaut werden kann. Vielfach lässt sich sogar das bekannte Ventil mit relativ geringem Aufwand auf das erfindungsgemässe Ventil umrüsten.

Eine weitere Vergrösserung der Schnelligkeit lässt sich durch die Ausführungsform nach Anspruch 2 erreichen, indem die Masse und damit die Trägheit des Hilfsverschlussteils reduziert wird, ohne dass anderswo im Ventil eine Massenvergrösserung notwendig wäre. Versuche haben gezeigt, dass das neue Ventil fünf bis sechs mal schneller als das bekannte betätigbar ist, zum Beispiel das Oeffnen in ca. 0,1 Sekunden anstatt 0,5 bis 0,6 Sekunden.

Ein Ausführungsbeispiel der Erfindung und seine Vorteile werden in der folgenden Beschreibung anhand der Zeichnung näher erläutert. Es zeigen:

Fig. 1 einen Längsschnitt durch ein Ventil nach der Erfindung,

Fig. 2 in kleinerem Massstab als in Fig. 1 das Ventil mit geschlossenem Hauptverschlussteil und offenem Hilfsverschlussteil,

Fig. 3 in kleinerem Massstab als in Fig. 1 das Ventil mit offenem Haupt- und offenem Hilfsverschlussteil und

Fig. 4 in kleinerem Massstab als in Fig. 1 das Ventil mit offenem Hauptverschlussteil und geschlossenem Hilfsversc                              hlussteil.

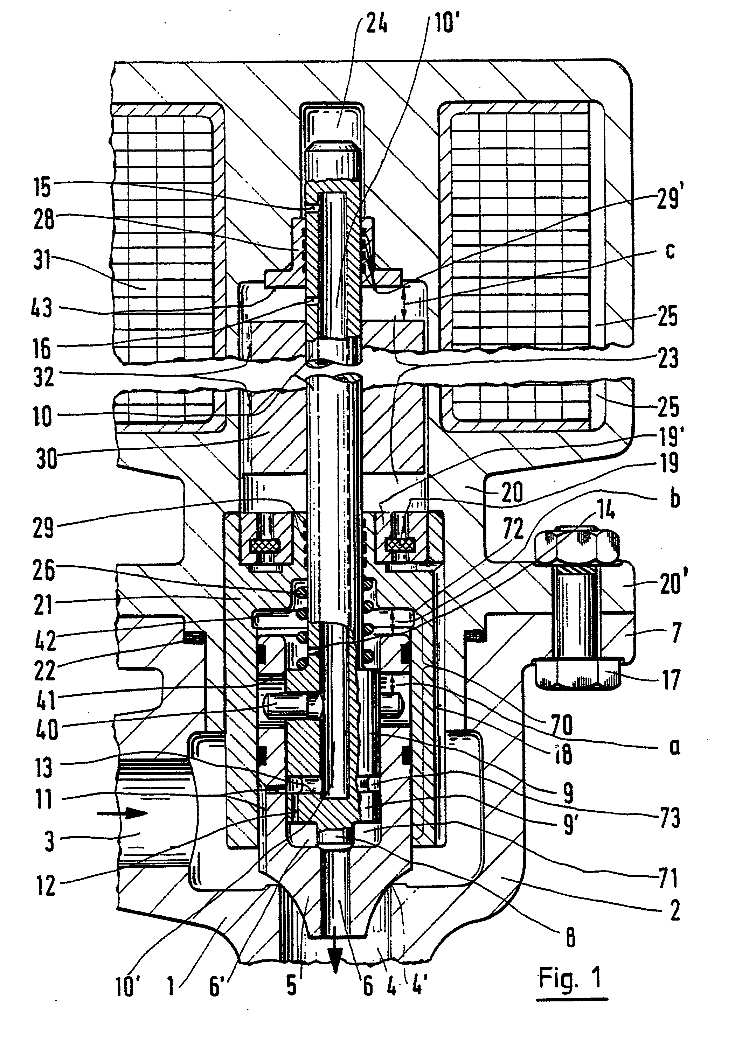

Gemäss Fig. 1 weist ein von Dampf als eigenem Druckmedium betätigbares Ventil ein Gehäuse 1 auf, in dem eine Druckkammer 2 enthalten ist. In diese Druckkammer mündet eine horizontale Zufuhrleitung 3 und es zweigt von der Druckkammer eine vertikale Austrittsleitung 4 ab, wobei das Gehäuse 1 im Bereich der Abzweigung mit einem ersten Ventilsitz 4' versehen ist. Mit dem ersten Ventilsitz 4' wirkt ein in der Druckkammer 2 vertikal verschiebbares Hauptverschlussteil 5 zusammen, das eine zylindrische Ventilkammer 70 aufweist, die über eine Durchlassöffnung 6 im Hauptverschlussteil 5 mit der Austrittsleitung 4 verbindbar ist. Ein Hilfsverschlussteil 8 ist im Hauptverschlussteil 5 koaxial verschiebbar angeordnet und weist einen oberen, längeren und einen unteren, kürzeren kolbenartigen Führungsteil 9 bzw. 9' auf, die in der Ventilkammer 70 gleiten. Das Hilfsverschlussteil 8 wirkt mit einem zweiten Ventilsitz 6' zusammen, der im Bereich der Mündung der Durchlassöffnung 6 in der Ventilkammer 70 angeordnet ist. Die Führungsteile 9, 9' sind einteilig mit einer Spindel 10 verbunden, die sich an den Hilfsverschlussteil 8 nach oben anschliesst. Durch die Führungsteile 9 und 9' wird die Ventilkammer 70 in eine erste, der Durchlassöffnung 6 zugewandte Teilkammer 71, eine der Durchlassöffnung 6 abgewandte Teilkammer 72 und einen zwischen den Führungsteilen befindlichen Verbindungsraum 73 unterteilt.

Das Gehäuse 1 weist einen Deckel 20 mit Flansch 20' auf, der mittels Schrauben 17 an einem Gehäuseflansch 7 befestigt ist. Im Deckel 20 ist eine Führungshülse 21 vorgesehen, in der der Hauptverschlussteil 5 gleitet. Zwischen den Flanschen 20' und 7 ist ein Dichtring 22 eingelegt. Der gehäuseartig ausgebildete Deckel 20 enthält oberhalb der Ventilkammer 70 einen im wesentlichen zylindrischen Druckraum 23 und oberhalb von diesem einen davon getrennten, die Spindel 10 umgebenden Ausgleichsraum 24. Im Druckraum 23 ist ein mit der Spindel 10 verbundener und mit dieser zusammen verschiebbarer Magnetanker 30 vorgesehen. In einem vom Druckraum 23 und vom Ausgleichsraum 24 abgetrennten Ringraum 25 des Deckels 20 ist eine Magnetspule 31 angeordnet, die an eine nicht gezeigte Gleichstromquelle anschliessbar ist und die nach dem Prinzip "stromlos zu" arbeitet, d.h. im stromdurchflossenen Zustand auf den Magnetanker 30 anzieht und das Hilfsverschlussteil 8 im öffnenden Sinne betätigt. Zwischen der oberen Stirnfläche des Führungsteils 9 und der Führungshülse 21 ist eine Druckfeder 26 angeordnet, die also im schliessenden Sinne auf das Hilfsverschlussteil 8 wirkt, gleich wie sein Eigengewicht.

Eine Oeffnung 11 im Hauptverschlussteil 5 verbindet bei geschlossenem Hilfsverschlussteil 8 die Druckkammer 2 mit dem Verbindungsraum 73, der über eine den Führungsteil 9' durchquerende Bohrung 12 mit der ersten Teilkammer 71 und über eine erste Querbohrung 13 in der Spindel 10 mit einem in der Spindel 10 sich axial erstreckenden Hohlraum 10' verbunden ist. Der Hohlraum 10' ist ausserdem über eine zweite Querbohrung 14 mit der zweiten Teilkammer 72 in allen Stellungen des Haupt- und des Hilfsverschlussteils 5 bzw. 8 verbunden, so dass die beiden Teilkammern 71 und 72 stets über den Verbindungsraum 73 miteinander verbunden sind. Ueber einen Kanal 18 ist die Druckkammer 2 mit dem Druckraum 23 durchgehend verbunden. Im Bereich des oberen Endes der Führungshülse 21 sind im Kanal 18 Filter vorgesehen, die von kreisbogenförmigen, leicht ein- und ausbaubaren Filterpatronen 19' getragen sind und den Zutritt von Verunreinigungen im Druckmedium zum Druckraum 23 verhindern. Eine axiale Nut 32 im Magnetanker 30 bewirkt einen ständigen Druckausgleich innerhalb des Druckraumes 23.

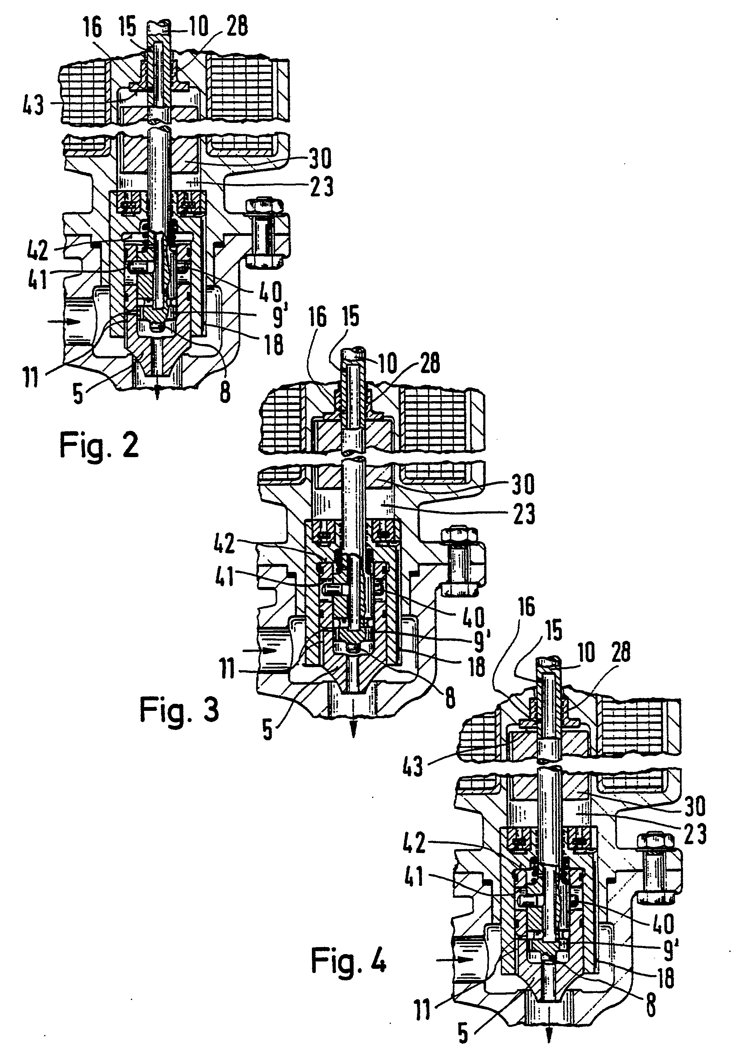

Der Druckraum 23 ist mittels in der Führungshülse 21 angeordneter, an der Spindel 10 anliegender Dichtungsringe 29 von der Ventilkammer 70 druckdicht abgeschlossen. Desgleichen ist der Druckraum 23 vom Ausgleichsraum 24 druckdicht getrennt, indem Dichtungsringe 29' vorgesehen sind, die von einer zwischen dem Druck- und dem Ausgleichsraum 23 bzw. 24 angebrachten Büchse 28 getragen werden. Der Hohlraum 10' ist in allen Stellungen des Hilfsverschlussteils 8 über eine dritte Querbohrung 15 mit dem Ausgleichsraum 24 verbunden. Eine vierte Querbohrung 16 in der Spindel 10 verbindet bei gleichzeitig geschlossenem Haupt- und Hilfsverschlussteil 5 bzw. 8 den Druckraum 23 mit dem Hohlraum 10' (Fig. 1) und ist so angeordnet, dass sie bei voll geöffnetem Hilfsverschlussteil 8 und geschlossenem Hauptverschlussteil 5 (Fig. 2) oder bei wenig geöffnetem Hilfsverschlussteil 8 und voll geöffnetem Hauptverschlussteil 5 (Fig. 3) oder geschlossenem Hilfsverschlussteil 8 und voll geöffnetem Hauptverschlussteil 5 (Fig. 4) von der Büchse 28 bedeckt ist.

Der Hilfsverschlussteil 8 weist zwei im Führungsteil 9 zueinander koaxiale, nach aussen gerichtete horizontale Stifte 40 auf, die in je eine horizontale Bohrung im Hauptverschlussteil 5 hineinragen. Diese Bohrungen weisen einen grösseren Durchmesser als die Stifte 40 auf, wobei die obere Begrenzung 41 jeder Bohrung eine erste Anschlagfläche für den entsprechenden Stift 40 bildet, die die Oeffnungsbewegung (Hub a) des Hilfsverschlussteils 8 relativ zum Hauptverschlussteil 5 begrenzt. Die Führungshülse 21 weist eine zweite Anschlagfläche 42 auf, die die Oeffnungsbewegung (Hub b) des Hauptverschlussteils 5 relativ zum Gehäuse 1 begrenzt. Die untere Stirnfläche der Büchse 28 bildet eine dritte Anschlagfläche 43, die mit der oberen Stirnfläche des Magnetankers 30 zusammenwirkt und dadurch die Oeffnungsbewegung (Hub c) des Hilfsverschlussteils 8 relativ zur Führungshülse 21 bzw. Gehäuse 1 begrenzt. Die drei Anschlagflächen 41, 43, 43 sind so angeordnet, dass der Hub c des Hilfsverschlussteils 8 grösser ist als sein Hub a, aber kleiner als die Summe der Hübe a und b.

Das Ventil funktioniert wie folgt:
In der in Fig. 1 gezeigten Stellung, die die Sicherheitsstellung sein soll und in der die Magnetspule 31 stromlos ist, sitzen das Hauptverschlussteil 5 auf dem ersten Ventilsitz 4' und das Hilfsverschlussteil 8 auf dem zweiten Ventilsitz 6' und sperren somit den Dampfstrom von der Zufuhrleitung 3 zur Austrittsleitung 4. Der Dampf höheren Druckes in der Zufuhrleitung 3 wirkt in der Druckkammer 2 und über die Oeffnung 11 im Verbindungsraum 73 sowie über die Bohrung 12 in der ersten Teilkammer 71 und über die erste Querbohrung 13, den Hohlraum 10' und die zweite Querbohrung 14 in der zweiten Teilkammer 72. Der Dampf breitet sich über den Hohlraum 10' und die dritte Querbohrung 15 in den Ausgleichsraum 24 sowie über den Kanal 18 in den Druckraum 23 aus. Ueber die vierte Querbohrung 16 sind der Druckraum 23 und der Hohlraum 10' zusätzlich miteinander verbunden. Stromoberhalb des ersten Sitzes 4' herrscht also überall der gegenüber dem Druck in der Austrittsleitung 4 höhere Druck. Der Dichtring 22 verhindert dabei einen Druckverlust zwischen den Flanschen 7 und 20'. Auf das Hilfsverschlussteil 8 wirkt eine Kraft in schliessendem Sinne, die vom Druckunterschied des Dampfes in der Zufuhrleitung 3 und der Austrittsleitung 4 abhängig ist, der auf eine der Querschnittsfläche der Durchlassöffnung 6 gleichgrosse Fläche wirkt; zusätzlich wirken die Druckfeder 26 und das Eigengewicht als Schliesskraft. Auf das Hauptverschlussteil 5 wirkt, ebenfalls im schliessenden Sinne, eine Kraft, die vom erwähnten Druckunterschied mal die Querschnittfläche der Austrittsleitung 4 abhängig ist, sowie die Schliesskraft des Hilfsverschlussteils 8 und das Eigengewicht des Hauptverschlussteils.

Wird nun die Magnetspule 31 an die Gleichstromquelle angeschlossen, so zieht sie den Magnetanker 30 und mit ihm das Hilfsverschlussteil 8 - entgegen der Schliesskraft - um den Hub a nach oben bis die Stifte 40 die erste Anschlagfläche 41 berühren (Fig. 2). In dieser Stellung des Hilfsverschlussteils 8 überdecken der Führungsteil 9' die Oeffnung 11 im Hauptverschlussteil 5 und die Büchse 28 die vierte Querbohrung 16. Die erste Teilkammer 71 ist jetzt über die Durchlassöffnung 6 mit der Austrittsleitung 4 verbunden. Entlang der Durchlassöffnung 6, der Bohrung 12, der ersten Querbohrung 13, dem Hohlraum 10', der zweiten Querbohrung 14 und der dritten Querbohrung 15 sinkt der Druck in der ersten Teilkammer 71, im Verbindungsraum 73, in der zweiten Teilkammer 72 und im Ausgleichsraum 24 sehr rasch ab. Im Druckraum 23 herrscht nach wie vor beidseitig des Magnetankers 30 der gleiche Druck wie in der Zufuhrleitung 3. Der Hilfsverschlussteil 8 ist also gesamthaft keinen nennenswerten Druckunterschieden ausgesetzt und wird lediglich von der Magnetkraft nach oben sowie von der Kraft der Druckfeder 26 und dem Eigengewicht nach unten belastet, wobei die daraus resultierende, nach oben wirkende Kraft von den ersten Anschlagflächen 41 am Hauptverschlussteil 5 aufgenommen wird. Auf dem Hauptverschlussteil 5 wirkt nach oben eine Kraft, die dem Druckunterschied auf die Ringfläche entspricht, die sich zwischen dem ersten Ventilsitz 4' und dem Aussendurchmesser des Hauptverschlussteils 5 erstreckt, zusammen mit der nach oben auf den Hilfsverschlussteil 8 wirkenden, resultierenden Kraft; nach unten dagegen wirkt das Eigengewicht des Verschlussteils 5.

Da die auf das Hauptverschlussteil 5 nach oben wirkenden Kräfte grösser sind als sein Eigengewicht, verschiebt sich dieser Teil 5 um den Hub b nach oben, bis es an der zweiten Anschlagfläche 42 anliegt (Fig. 3). Gleichzeitig verschiebt sich der Hilfsverschlussteil 8 ebenfalls nach oben bis zum Anliegen des Magnetankers 30 an der dritten Anschlagfläche 43. Gegenüber der Führungshülse 21 hat sich nun das Hilfsverschlussteil 8 um den gesamten Hub c nach oben verschoben, der - wie erwähnt - kleiner ist als die Summe der Hübe a und b, so dass in der Offenstellung des Hauptverschlussteils 5 der Hilfsverschlussteil 8 sich sehr nahe am zweiten Ventilsitz 6' befindet (Fig. 3). In dieser Stellung sind - wie in der Stellung nach Fig. 2 - die Oeffnung 11 und die vierte Querbohrung 16 immer noch von dem Führungsteil 9' bzw. von der Büchse 28 überdeckt.

Das Ventil wird durch Abschalten der Gleichstromquelle wieder geschlossen. In diesem Fall hört die magnetische Anziehung zwischen der Magnetspule 31 und dem Magnetanker 30 auf, so dass die Druckfeder 26 und Eigengewicht des Hilfsverschlussteils 8 dieses in seine Schliessstellung verschieben (Fig. 4). Dadurch wird die Verbindung zwischen der Austrittsleitung 4 und der ersten Teilkammer 71 unterbrochen und zugleich - infolge der Verschiebung des Führungsteils 9' - die Verbindungsöffnung 11 zum Verbindungsraum 73 freigelegt, so dass Dampf höheren Druckes aus der Druckkammer 2 in den Verbindungsraum 73, die erste Teilkammer 71, die zweite Teilkammer 72 und den Ausgleichsraum 24 strömt. Infolge des nun herrschenden Druckunterschiedes zur Austrittsleitung 4 fährt auch das Hauptverschlussteil 5 in seine Schliessstellung zurück (Fig. 1), wobei seine Schliessbewegung zusätzlich beschleunigt wird, sobald die vierte Querbohrung 16 aus der Büchse 28 austritt und wieder in den Druckraum 23 mündet, so dass noch mehr Dampf höheren Druckes in den Hohlraum 10' und in die damit verbundenen Räume eindringt.

Die getrennte Druckbeaufschlagung des Druckraumes 23 und des Ausgleichsraumes 24 - jener stets mit Druckmedium höheren Druckes und dieser mit Druckmedium aus der Ventilkammer 70 - ist ein wesentlicher Grund für die Schnelligkeit der Bewegung des erfindungsgemässen Ventils, da dadurch einerseits ein ständiger Druckausgleich im Druckraum 23 herrscht, so dass in diesem kein nennenswerter Widerstand gegen Verschiebungen des Hilfsverschlussteils 8 entsteht, und andererseits der mit veränderlichem Druck beaufschlagte Bereich relativ klein wird, so dass nach jeder Druckänderung ein Druckausgleich sehr rasch zustande kommt.

Der sehr kleine Hub, den der Hilfsverschlussteil 8 auszuführen hat, um bei offenem Hauptverschlussteil 5 in seine Schliessstellung auf dem Sitz 6' zu gelangen, ist im Falle eines nach dem Prinzip "stromlos zu" arbeitenden Ventiles besonders zweckmässig, weil dann hauptsächlich die Druckfeder 26 den nötigen Antrieb liefert. Im Falle einer Ausführungsform des Ventils, das nach dem Prinzip "stromlos offen" arbeitet, also mit der offenen Stellung als Sicherheitsstellung, wirkt die Magnetkraft zusätzlich im schliessenden Sinne auf das Hilfsverschlussteil 8.

Die Anordnung der vierten Querbohrung 16 im beschriebenen Ausführungsbeispiel (Fig. 1 bis 4) wurde so gewählt, dass sie beim Schliessen des Ventils so rasch als möglich von der Ueberdeckung durch die Büchse 28 befreit ist, damit aus dem Druckraum 23 zusätzlich Dampf höheren Druckes in den Hohlraum 10' strömen kann, um den Schliessvorgang zu beschleunigen. Bei einem Ventil des Prinzips "stromlos offen" wirkt dagegen, wie bereits erwähnt, die Magnetkraft im schliessenden Sinne, so dass man bei seiner Auslegung bestrebt ist, die Oeffnungsbewegung zusätzlich zu unterstützen. In diesem Fall wird man die vierte Querbohrung 16 so anordnen, dass sie bei geschlossenem Ventil unmittelbar unterhalb der Büchse 28 steht. Dadurch wird gleich am Anfang einer Oeffnungsbewegung des Hilfsverschlussteils die Bohrung 16 überdeckt und der Dampfstrom aus dem Druckraum 2 und der Druckkammer 23 in den Hohlraum 10' unterbrochen, was die Druckabnahme in der Ventilkammer 70 und im Ausgleichsraum 24 beschleunigt.

Das Führen des Hauptverschlussteils 5 in der Führungshülse 21 erleichtert das Ein- und Ausbauen des Magnetventils. Es ist aber auch möglich, das Hauptverschlussteil 5 im unteren Teil des Gehäuses 1 direkt zu führen.

Die verschiedenen Oeffnungen, Bohrungen und Kanäle des erfindungsgemässen Ventils werden so dimensioniert, dass unter Berücksichtigung der festigkeits- und herstellungsmässigen Erfordernisse die resultierenden Drosselwirkungen zu einem optimalen mechanischen, thermodynamischen und strömungstechnischen Verhalten des gesamten Ventils führen. Grundsätzlich sollten sie so gross wie möglich sein, um zugleich geringe Strömungsgeschwindigkeiten des Druckmediums innerhalb des Ventils und rasche Bewegungen des Haupt- und Hilfsverschlussteils zu ermöglichen. Im Ausführungsbeispiel sind einfachheitshalber jeweils eine Oeffnung, eine Bohrung oder ein Kanal gezeigt. Es ist jedoch möglich, jeweils mehrere davon vorzusehen.

Ein besonderer Vorteil der Erfindung liegt darin, einen Stellungsgeber im Bereich des der Ventilkammer 70 abgewandten Endes des Hilfsverschlussteils 8 anzuordnen, der sowohl die Stellung des Hilfsverschlussteils 8 als auch des Hauptverschlussteils 5 angibt.

## Patentansprüche

1. Eigenmediumbetätigtes, durch ein Hilfsverschlussteil (8) vorgesteuertes Ventil mit einem eine Druckkammer (2) enthaltenden Gehäuse (1), an das eine Druckmediumzufuhrleitung (3) und eine Druckmediumaustrittsleitung (4) angeschlossen sind, mit einem in der Druckkammer (2) verschiebbaren Hauptverschlussteil (5), der in seiner Schliessstellung mit einem ersten Ventilsitz (4') im Bereich der Austrittsleitung (4) zusammenwirkt und der eine Ventilkammer(70) aufweist, die über mindestens eine Oeffnung (11) mit der Druckkammer (2) und über eine Durchlassöffnung (6) mit der Austrittsleitung (4) verbunden ist und in der koaxial zum Hauptverschlussteil (5) der elektromagnetisch verschiebbare Hilfsverschlussteil (8) angeordnet ist, der in seiner Schliessstellung mit einem zweiten Ventilsitz (6') im Bereich der Durchlassöffnung (6) im Hauptverschlussteil (5) zusammenwirkt und zwei koaxiale, gleichen Durchmesser aufweisende, mit axialem Abstand auf einer Spindel (10) des Hilfsverschlussteils (8) angeordnete Führungsteile (9 und 9') aufweist, die den Hilfsverschlussteil in der Ventilkammer (70) führen und diese in eine erste, der Austrittsleitung (4) zugewandte Teilkammer (71) und eine zweite, der Austrittsleitung (4) abgewandte Teilkammer (72) und einem dazwischen angeordneten Verbindungsraum (73) unterteilen, wobei die beiden Teilkammern (71 und 72) nur über den Verbindungsraum (73) miteinander verbunden sind und wobei die Oeffnung (11) zwischen der Ventilkammer (70) und der Druckkammer (2) nur in der Schliessstellung des Hilfsverschlussteils (8) in den Verbindungsraum (73) mündet und in der Offenstellung des Hilfsverschlussteils (8) von dem der ersten Teilkammer (71) zugewandten Führungsteil (9') überdeckt ist, mit einer ersten Anschlagfläche (41) am Hauptverschlussteil (5) zur Begrenzung der Oeffnungsbewegung (Hub a) des Hilfsverschlussteils (8) relativ zum Hauptverschlussteil (5) und einer zweiten Anschlagfläche (42) am Gehäuse (1) zur Begrenzung der Oeffnungsbewegung (Hub b) des Hauptverschlussteils (5) relativ zum Gehäuse (1) und mit einem Druckraum (23), der einen mit der Spindel (10) des Hilfsverschlussteils (8) verbundenen Magnetanker (30) enthält und der zwischen der Ventilkammer (70) und einem Ausgleichsraum (24) vorgesehen ist, der an dem der Ventilkammer (70) abgewandten Ende des Hilfsverschlussteils (8) angeordnet ist, dadurch gekennzeichnet, dass eine dritte Anschlagfläche (43) zur Begrenzung der Oeffnungsbewegung (Hub c) des Hilfsverschlussteils (8) relativ zum Gehäuse (1) vorgesehen ist, dass die drei Anschlagflächen (41, 42, 43) so zueinander angeordnet sind, dass der grösstmögliche Hub (c) des Hilfsverschlussteils (8) relativ zum Gehäuse (1) grösser ist als sein grösstmöglicher Hub (a) relativ zum Hauptverschlussteil (5) und kleiner ist als die Summe des zuletztgenannten Hubes (a) und des grösstmöglichen Hubes (b) des Hauptverschlussteils (5) relativ zum Gehäuse (1), und dass einerseits der Druckraum (23) mit der Druckkammer (2) und andererseits der Ausgleichsraum (24) mit der Ventilkammer (70) ständig verbunden sind.

2. Ventil nach Anspruch 1, dadurch gekennzeichnet, dass die ständige Verbindung des Ausgleichsraumes (24) mit der Ventilkammer (70) aus einem in Längsrichtung der Spindel (10) des Hilfsverschlussteils (8) sich erstreckenden Hohlraum (10') besteht.

3. Ventil nach Anspruch 1 oder 2, dadurch gekennzeichnet, dass zwischen dem Druckraum (23) und der Ventilkammer (70) eine absperrbare Verbindung besteht.

4. Ventil nach einem der Ansprüche 1 bis 3, dadurch gekennzeichnet, dass das Gehäuse (1) einen Deckel (20) aufweist, der den Druckraum (23) und den Ausgleichsraum (24) enthält, und dass im Deckel (20) eine Führungshülse (21) für den Hauptverschlussteil (5) befestigt ist.

5. Ventil nach Anspruch 3 oder 4, dadurch gekennzeichnet, dass die absperrbare Verbindung zwischen dem Druckraum (23) und der Ventilkammer (70) aus einer in den Hohlraum (10') der Spindel (10) des Hilfsverschlussteils (8) mündenden Querbohrung (16) besteht, die so angeordnet ist, dass sie in der Schliessstellung des Hilfsverschlussteils (8) im Druckraum (23) mündet und mindestens bei dem grösstmöglichen Hub (a) des Hilfsverschlussteils (8) relativ zum Hauptverschlussteil (5) vom Druckraum (23) abgesperrt ist.

6. Ventil nach einem der Ansprüche 2 bis 5, dadurch gekennzeichnet, dass der Hohlraum (10') in der Spindel (10) mit der zweiten Teilkammer (72) und mit dem Verbindungsraum (73) stets verbunden ist.

7. Ventil nach einem der Ansprüche 1 bis 6, dadurch gekennzeichnet, dass der Druckraum (23) und die Druckkammer (2) durch mindestens einen Kanal 18 miteinander verbunden sind, in dem ein Filter (19) angeordnet ist.

## Revendications

1. Soupape actionnée par son propre fluide, commandée préliminairement par une pièce de fermeture auxiliaire (8) et comportant un boîtier (1) contenant une chambre de pression (2) et sur lequel sont raccordées une conduite (3) d'amenée de fluide sous pression et une conduite (4) de sortie de fluide sous pression, une pièce principale de fermeture (5) pouvant se déplacer dans la chambre de pression (2), qui coopère dans sa position de fermeture avec un premier siège de soupape (4') au voisinage de la conduite de sortie (4) et qui présente une chambre de soupape (70) qui est reliée par l'intermédiaire d'au moins un orifice (11) avec la chambre de pression (2) et par l'intermédiaire d'un orifice de passage (6) avec la conduite de sortie (4) et dans laquelle est disposée coaxialement par rapport à la pièce de fermeture principale (5) la pièce de fermeture auxiliaire (8) déplaçable électromagnétiquement et qui, dans sa position de fermeture, coopère avec un deuxième siège de soupape (6') au voisinage de l'orifice de passage (6) se trouvant dans la pièce principale de fermeture (5) et présente deux pièces coaxiales de guidage (9) et (9') présentant le même diamètre et disposées à distance axiale sur un axe (10) de la pièce de fermeture auxiliaire (8), les pièces de guidage guidant la pièce de fermeture auxiliaire dans la chambre de soupape (70) et subdivisant cette dernière en une première chambre partielle (71) tournée vers la conduite de sortie (4) et une deuxième chambre partielle (72) tournée à l'opposé de la conduite de sortie (4) ainsi qu'un espace de liaison (73) disposé entre elles, les deux chambres partielles (71 et 72) étant alors réunies l'une à l'autre seulement par l'intermédiaire d'un espace de liaison (73) et l'orifice (11) entre la chambre de soupape (110) et la chambre de pression (2) ne débouchant que dans la position de fermeture de la pièce auxiliaire de fermeture (8) dans l'espace de liaison (73) et étant couvert dans la position ouverte de la pièce de fermeture auxiliaire (8) par la pièce de guidage (9') tournée vers la première chambre partielle (71), une première surface de butée (41) sur la pièce de fermeture principale (5) pour limiter le mouvement d'ouverture (course a) de la pièce auxiliaire de fermeture (8) relativement à la pièce de fermeture principale (5) et une deuxième surface de butée (42) sur le boîtier (1) pour limiter le mouvement d'ouverture (course b) de la pièce principale de fermeture (5) relativement au boîtier (1), et un espace de pression (23) qui contient une ancre magnétique (30) reliée à l'arbre (10) de la pièce auxiliaire de fermeture (8) et qui est prévu entre la chambre de soupape (70) et un espace d'équilibrage (24) qui se trouve sur l'extrémité de la pièce auxiliaire de fermeture (8) tournée à l'opposé de la chambre de soupape (70), soupape caractérisée en ce qu'on prévoit une troisième surface de butée (43) pour limiter le mouvement d'ouverture (course c) de la pièce de fermeture auxiliaire (8) relativement au boîtier (1), en ce que les trois surfaces de butée (41, 42, 43) sont disposées de telle manière l'une par rapport à l'autre que la course la plus grande possible (c) de la pièce de fermeture auxiliaire (8) relativement au boîtier (1) est plus grande que sa course la plus grande possible (a) relativement à la pièce principale de fermeture (5) et est plus faible que la somme de la course mentionnée en dernier (a) et de la course la plus grande possible (b) de la pièce de fermeture principale (5) relativement au boîtier (1), et en ce que, d'une part, l'espace de pression (23) et d'autre part l'espace d'équilibrage (24) sont reliés constamment et respectivement à la chambre de pression (2) et à la chambre de soupape (70).

2. Soupape selon la revendication 1, caractérisée en ce que la liaison constante de l'espace d'équilibrage (24) avec la chambre de soupape (70) est constituée par un espace creux (10') s'étendant dans le sens longitudinal de l'axe (10) de la pièce auxiliaire de fermeture (8).

3. Soupape selon la revendication 1 ou la revendication 2, caractérisée en ce qu'il y a une liaison blocable entre l'espace de pression (23) et la chambre de soupape (70).

4. Soupape selon l'une quelconque des revendications 1 à 3, caractérisée en ce que le boîtier (1) présente un couvercle (20) qui contient l'espace de pression (23) et l'espace d'équilibrage (24) et en ce que dans le couvercle (20) on fixe un manchon de guidage (21) pour la pièce principale de fermeture (5).

5. Soupape selon la revendication 3 ou la revendication 4, caractérisée en ce que la liaison blocable entre l'espace de pression (23) et la chambre de soupape (70) est constituée par un alésage transversal (16) débouchant dans l'espace creux (10') de l'axe (10) de la pièce de fermeture auxiliaire (8) et qui se trouve de manière à déboucher dans la position de fermeture de la pièce auxiliaire de fermeture (8) se trouvant dans l'espace de pression (23), et est bloquée au moins lors de la course la plus grande possible (a) de la pièce auxiliaire de fermeture (8) relativement à la pièce principale de fermeture (5), par l'espace de pression (23).

6. Soupape selon l'une des revendications 2 à 5, caractérisée en ce que l'espace creux (10') dans l'axe (10) est relié à la deuxième chambre partielle (72) et à l'espace de liaison (73) de façon constante.

7. Soupape selon l'une quelconque des revendications 1 à 6, caractérisée en ce que l'espace de pression (23) et la chambre de pression (2) sont reliés l'un à l'autre par au moins un canal (18) dans lequel est disposé un filtre (19).

**Claims**

1. An own-medium-activated valve which is piloted by an auxiliary lid (8) and which has: a casing (1) which comprises a pressure chamber (2) and to which a pressure medium feed line (3) and a pressure medium discharge line (4) are connected; a main lid (5) which is movable in the pressure chamber (2) and which in its closed position co-operates with a first valve seat (4') near the discharge line (4) and which has a valve chamber (70) communicating by way of at least one orifice (11) with the pressure chamber (2) and by way of a passage (6) with the discharge line (4) and in which the electromagnetically movable auxiliary lid (8) is disposed coaxially of the main lid (5), the auxiliary lid (6) co-operating when in its closed position with a second valve seat (6') near the passage (6) in the main lid (5) and having two coaxial guide members (9, 9') which are of the same diameter as one another and which are disposed in axially spaced-apart relationship on a spindle (10) of the auxiliary lid (8) and which guide the same in the valve chamber (70) and subdivide the same into a first subchamber (71) near the discharge line (4), into a second subchamber (72) remote therefrom and into a communicating chamber (73) disposed between them, the two subchambers (71, 72) intercommunicating only by way of the communicating chamber (73), the orifice (11) between the valve chamber (70) and the pressure chamber (2) communicating with the communicating chamber (73) only when the auxiliary lid (8) is in its closed position and being covered, when the same is in its open position, by the guide member (9') near the first subchamber (71); a first abutment surface (41) on the main lid (5) to limit the opening movement (stroke a) of the auxiliary lid (8) relatively to the main lid (5); and a second abutment surface (42) on the casing (1) to limit the opening movement (stroke b) of the main lid (5) relatively to the casing (1); and a pressure space (23) which receives a magnet armature (30) connected to the auxiliary lid spindle (10) and which is disposed between the valve chamber (70) and an equalizing or compensating chamber (24) disposed at that end of the auxiliary lid (8) which is remote from the valve chamber (70), characterised in that a third abutment surface (43) effective to limit the opening movement (stroke c) of the auxiliary lid (8) relatively to the casing (1) is provided, the three abutment surfaces (41, 42, 43) are so disposed relatively to one another that the maximum possible stroke (c) of the auxiliary lid (8) relatively to the casing (1) is greater than its maximum possible stroke (a) relatively to the main lid (5) and less than the sum of the last-mentioned stroke (a) and the maximum possible stroke (b) of the main lid (5) relatively to the casing (1), and the pressure space (23) communicates permanently with the pressure chamber (2) and the equalizing or compensating chamber (24) communicates permanently with the valve chamber (70).

2. A valve according to claim 1, characterised in that the permanent communication between the compensating or equalizing chamber (24) and the valve chamber (70) comprises a cavity (10') which extends lengthwise of the auxiliary lid spindle (10).

3. A valve according to claim 1 or 2, characterised in that a closable connection exists between the pressure space (23) and the valve chamber (70).

4. A valve according to any of claims 1–3, characterised in that the casing (1) has a covet (20) which receives the pressure space (23) and the compensating or equalizing chamber (24), and a guide sleeve or liner or the like (21) for the main lid (5) is secured in the cover (20).

5. A valve according to claim 3 or 4, characterised in that the closable communication between the pressure space (23) and the valve chamber (70) is in the form of a transverse bore (16) which extends into the cavity (10') of the auxiliary lid spindle (10) and which is so disposed as to extend into the pressure space (23) with the auxiliary lid (8) closed and as to be shut off from the pressure space (23) at least during the maximum possible stroke (a) of the auxiliary lid (8) relatively to the main lid (5).

6. A valve according to any of claims 2–5, characterised in that the cavity (10') in the spindle (10) is in permanent communication with the second subchamber (72) and with the communicating chamber (73).

7. A valve according to any of claims 1–6, characterised in that the pressure space (23) and the pressure chamber (2) are interconnected by at least one passage (18) in which a filter (19) is disposed.

Fig. 1

Fig. 2

Fig. 3

Fig. 4